# EUROPEAN PATENT APPLICATION

(11) **EP 1 953 882 A1**
(43) Date of publication of application: **06.08.2008**
(21) Application number: 07425049.9
(22) Date of filing: 31.01.2007
(51) Int. Cl.: H02G 1/08

(54) **Tape assembly**

(71) Applicant: Canfor Utensili SRL, 20122 Milano (IT)
(72) Inventor: Zapparoli, Franco, 20149 Milano (IT)
(74) Representative: Dragotti, Gianfranco

(57) **Abstract**

A cable guide assembly (1) for passing cables through ducts comprises a flexible tape (2) and is characterized in that it comprises a flexible rod (7) provided with a head-piece (14, 114) for said cables, a first single joining means (13) able to fix permanently said flexible rod (7) to said tape (2) and a second single joining means (16) able to fix permanently said head-piece (14,114) to said flexible rod (7).

## Description

### FIELD OF APPLICATION

The present invention relates to a cable guide assembly for laying electric cables, in particular inside pipes in domestic and industrial installations, and the description which follows is provided in relation to this field of application solely for the sake of simplifying illustration thereof.

### PRIOR ART

Tapes for laying cables, in particular electric conductor cables, inside ducts are commercially known; these tapes have a flexible body made of suitable material and have two ends, a first end of which is inserted inside the duct as a guide, while a cable to be passed inside the duct is connected to the second end.

The most difficult problem for the electrical engineer when laying the electrical conductors inside the ducts is, without doubt, the presence of bends, twists or constrictions which alter the dimensional characteristics of the duct, in particular reducing their diameter and making the insertion of the cables more difficult.

For example, in the case of posts, the rigid tubing inside which the cable must pass is often wound around the post, forming four bends; experience shows that the tape may not be used for more than two consecutive bends.

Normally, the cable is fastened to the tape by means of a so-called head-piece consisting of a flexible body which has, on one side, means for engagement with the cable to be laid inside the duct and, on the other side, a connection bush with a so-called "female" threading; in a complementary manner, the tape which engages with the head-piece has; crimped on one of its ends, a pin (male thread). The pin of the tape and the connection bush are engaged by means of screwing so as to allow coupling between the head-piece and the tape in order to ensure pulling of the cable inside the duct.

The association between head-piece and tape is therefore performed by means of screwing of two connection means, in the case in question the connection bush, on the head-piece side, and the pin of the tape, on the tape side.

The result of association of these connection means is a rigid joint with sizeable linear dimensions in relation to the normal diameter of the ducts used for housing cables and this size makes sliding of the cable in most cases difficult if not even impossible.

The object of the present invention is to provide a cable guide assembly which is improved in terms of sliding inside ducts, so as to be able to lay more easily cables inside the said duct.

### SUMMARY OF THE INVENTION

The technical problem is solved by a cable guide assembly for passing cables through ducts comprising:
- a flexible tape having a first and a second end;
- a flexible rod having a flexible body and two ends, the first end having a head-piece for said cables;
characterized in that the second end of said flexible rod is permanently fixed to said second end of said flexible tape.

The characteristic features and advantages of the invention will become clear from the description, provided hereinbelow, of an example of embodiment thereof provided purely by way of a non-limiting example with reference to the accompanying drawings in which:

### BRIEF DESCRIPTION OF THE DRAWINGS

- Figure 1 shows schematically a cable guide assembly according to a first embodiment of the invention;
- Figure 2 shows a detail of the cable guide assembly according to Figure 1;
- Figure 3 shows schematically a cable guide assembly according to a second embodiment of the invention;
- Figure 4 shows a detail of the cable guide assembly according to Figure 3.

### DETAILED DESCRIPTION

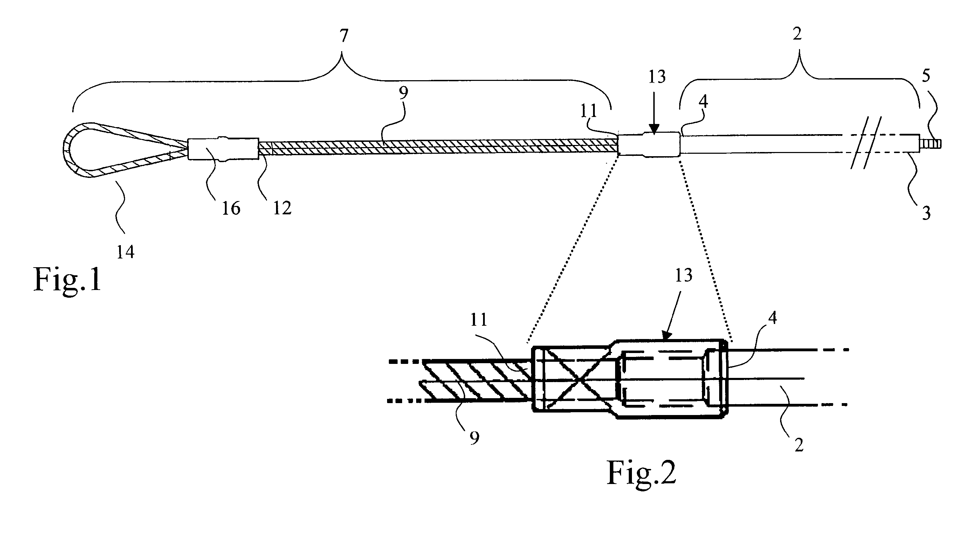

In Figure 1, in an embodiment of the present invention, a cable guide assembly 1 comprises a tape 2 which is known per se and has two ends, i.e. a first ends 3 which is free and a second end 4 which is not free.

The second end 4 is associated with a flexible rod 7 comprising a flexible body 9 which has, in turn, two ends 11 and 12, the first end close to the tape 12 and the second end distant from it.

The first end 12 has a head-piece which has the function of receiving a terminal part of the cable which is to be pulled inside the duct or facilitating sliding of a cable inside a duct; the head-piece may have different configurations; it may in fact be an engaging head 14 which is formed, for example, in one of the two following manners:
- eyed end-piece (not shown in the figures): this has the function of receiving a terminal portion of an electric cable once the cable guide assembly 1, inserted from a branch box, emerges from a socket box;
- eyelet (shown in Figure 1): this has the same function as the eyed end-piece, but with the possibility of receiving the terminal parts of several electrical cables once the cable guide assembly 1, inserted from a branch box, emerges from a socket box.

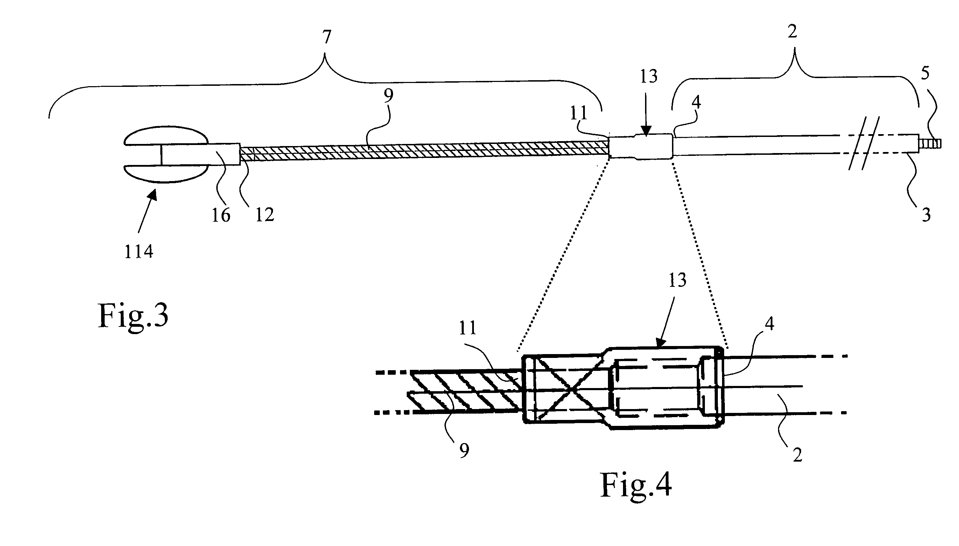

The head-piece may also be an insertion head-piece 114 which is formed, for example, in the manner of a pulley (shown in Figure 3) of a second embodiment of the invention, which helps the cable to slide inside a duct inside which another cable is already present.

Figures 3, 4 both refer to a second embodiment of the invention; in these figures, the identification numbers remain the same, except for the head-piece 114 in Figure 3, which replaces the head-piece 14 in Figure 1.

The engaging head-piece 14 (shown in Figure 1) and the insertion head-piece 114 (shown in Figure 3) will be referred to generally below as "head-piece" (14, 114).

The head-piece 14, 114 according to the invention, is crimped onto the flexible body 9, at a first end 12, by means of a first joining bush 16.

The tape 2, according to the invention, is crimped onto the flexible body 9, at the second end 11 of the latter, by means of a second joining bush 13, shown in detail in Figure 2.

Crimping of the head-piece 14, 114 and the tape 2 onto the flexible body 9 ensures that the flexible rod is formed as one piece with the tape 2 and with the head-piece 14, 114; the association is performed via single joining means, in particular a first and second joining bush 13 and 16. In other words, the second end of the flexible rod is permanently fixed to one end of the tape 2.

In an alternative embodiment, the head-piece 14, 114 is associated by means of fusion with the flexible body 9, at the first end 12 and the tape 2 is associated by means of fusion with the flexible body 9, at the second end 11.

The major advantage of these embodiments consists in the linear dimension of the joining bush 13, 16 compared to the solutions of the prior art; in the latter case, in fact, a male pin was screwed to the bush, resulting in the linear dimension of the complete joint being nearly 50% greater than the solution of the present invention.

The tape 2 has furthermore, at its first end 3, a pin 5 with male thread to which accessories, such as a flexible head, a travel wheel, a spring catch, an eyed tie-rod, an eyelet, a brush, etc. may be connected.

The cable guide assemblies 1 according to the invention are made of various materials so as to ensure the maximum resistance to stresses during the pulling and passing movement inside the ducts which have roughness and variations relative to the nominal dimensions. At the same time, the cable guide assembly 1 is formed so as to allow improved sliding of the rod 7 and the tape 2 which form it inside the ducts.

These objects are achieved by preferably manufacturing the tapes from materials such as nylon, neopren, polyester, glass fibre or the like. This does not prevent other materials being used, without thereby departing from the scope of protection of the present invention.

Preferably, but not exclusively, the flexible body 9 is formed by steel braiding which also ensures, on the one hand, a tensile strength and, on the other hand, in view of its flexibility, improved sliding inside the ducts.

The single joint (or permanent fixing system) between the flexible body 9 and the head-piece 14, 114 and between the flexible body 9 and the tape 2 ensures easy sliding of the cable guide assembly 1 inside the ducts.

The invention refers to ducts for cables both in the domestic and in the industrial sector; in this connection, the dimensional characteristics of the ducts and cables, such as diameters and lengths, are not to be regarded as limiting the present invention; the cable guide assembly 1 can in fact be designed with suitable dimensions depending on the preferred area of application.

From that described above, it is possible to understand the mode of application of the cable guide assembly 1 which may be used both for inserting a tape inside a duct and for laying cables.

The cable guide assembly 1 is inserted from a branch box and passed out from a socket box (end user box); the cables to be laid are inserted inside the eyelet or in other accessories of the head-piece passed out from the socket box and, on the branch box side, the entire assembly is pulled. When the cables pass out from the branch box, they already have the necessary length to be stripped and connected.

In accordance with that described, the present invention is claimed below.

## Claims

1. Cable guide assembly (1) for passing cables through ducts comprising:
- a flexible tape (2) having a first end (3) and a second end (4);
- a flexible rod (7) having a flexible body (9) and two ends (11, 12), the first end (12) having a head-piece (14, 114) for said cables, **characterized in that** the said second end (11) of said flexible rod (7) is permanently fixed to said second end (4) of said flexible tape.

2. Cable guide assembly (1) according to Claim 1, in which said permanent fixing system is achieved by means of a first single joining means (13).

3. Cable guide assembly (1) according to Claim 2, in which said first single joining means comprise a connection bush (13).

4. Cable guide assembly according to one of Claims 2 or 3, in which said connection bush (13) is associated by means of crimping with said second end (4) of the tape (2).

5. Cable guide assembly according to one of Claims 2 or 3, in which said connection bush (13) is associated by means of fusion with said second end (4) of said tape (2).

6. Cable guide assembly (1) according to Claim 1, **characterized in that** the head-piece (14, 114) is permanently fixed to said first end (12) of said flexible rod (7).

7. Cable guide assembly (1) according to Claim 6, in which said permanent fixing system is achieved by means of a second single joining means (16).

8. Cable guide assembly (1) according to Claim 7, in which said single joining means comprises a connection bush (16).

9. Cable guide assembly according to one of Claims 7 or 8, in which said connection bush (16) is associated by means of crimping with said first end (12) of said flexible rod (7).

10. Cable guide assembly according to one of Claims 7 or 8, in which said connection bush (16) is associated by means of fusion with said first end (12) of said flexible rod (7).

11. Cable guide assembly according to one of the preceding claims, in which said head-piece (14) is an eyelet.

12. Cable guide assembly according to one of the preceding claims, in which said head-piece (114) is a travel wheel.

13. Cable guide assembly according to one of the preceding claims, in which said head-piece is an eyed end-piece.

14. Cable guide assembly according to one of the preceding claims, in which said flexible body (9) is a stainless steel braiding.
